# EUROPEAN PATENT APPLICATION

(11) **EP 3 858 731 A1**
(43) Date of publication of application: **04.08.2021**
(21) Application number: 19924818.8
(22) Date of filing: 18.04.2019
(51) Int. Cl.: B64C 27/50, B64C 27/48

(54) **PROPELLER, POWER ASSEMBLY, AND AERIAL VEHICLE**

(71) Applicant: SZ DJI Technology Co., Ltd., Shenzhen, Guangdong 518057 (CN)
(72) Inventor: CHEN, Peng, Shenzhen, Guangdong 518057 (CN); LI, Jianfang, Shenzhen, Guangdong 518057 (CN)
(74) Representative: Goddar, Heinz J.
(86) International application number: PCT/CN2019/083161
(87) International publication number: WO 2020/211028

(57) **Abstract**

The present invention provides a propeller, a power assembly and an aerial vehicle. The propeller includes a propeller hub and at least two propeller blades arranged at equal intervals along a periphery of the propeller hub. The propeller blades are rotatably connected to the propeller hub through a rotating shaft so as to fold the propeller blades toward an axis of rotation of the propeller hub, or to unfold the propeller blades away from the axis of rotation of the propeller hub. In addition, there is a preset angle between an axis of the rotating shaft and the axis of rotation. The propeller hub is configured to be in connection with a drive device for power transmission, to drive the propeller hub to rotate around the axis of rotation. After the aerial vehicle lands on the ground, the propeller blades rotates around the rotating shaft, so that the propeller blades fold toward the axis of rotation of the propeller hub, thereby preventing the propeller blade from hitting the ground or an object on the ground, and preventing the propeller blade from being damaged.

## Description

### TECHNICAL FIELD

Embodiments of the present invention relate to aerial vehicle manufacturing technologies, and in particular, to a propeller, a power assembly and an aerial vehicle.

### BACKGROUND

An aerial vehicle includes a propeller and a drive device, and the propeller is in connection with the drive device for power transmission, to drive the propeller to rotate during operation of the drive device, so as to provide power for the aerial vehicle.

In the existing technology, a propeller includes a propeller hub in connection with a drive device of an aerial vehicle for power transmission and at least two propeller blades arranged at equal intervals along a periphery of the propeller hub. The propeller blades and the propeller hub are integrally formed. The drive device drives the propeller hub and the propeller blades to rotate during operation, to provide power for the aerial vehicle.

However, the propeller blades extend along a direction perpendicular to an axis of the propeller, occupying a relatively large space. In addition, after the aerial vehicle lands on the ground, the propeller blades are likely to hit external objects, which may easily damage the propeller blades.

### SUMMARY

The embodiments of the present invention provide a propeller, a power assembly and an aerial vehicle to solve the following problem: the propeller blades extend along a direction perpendicular to an axis of the propeller, occupying a relatively large space. In addition, after the aerial vehicle lands on the ground, the propeller blades are likely to hit external objects, which may easily damage the propeller blades.

The embodiments of the present invention provide a propeller, including: a propeller hub to rotate around an axis of rotation; at least two propeller blades rotatably connected to the propeller hub, and a status of rotation of the propeller blades relative to the propeller hub including an unfolded state and a folded state, wherein, in the unfolded state, a first angle is formed between a length direction of each propeller blade and the axis of rotation, in the folded state, a second angle is formed between the length direction of each propeller blade and the axis of rotation, and the second angle is unequal to the first angle.

The embodiments of the present invention further provide a propeller, including a propeller hub, and at least two propeller blades arranged at equal intervals along a periphery of the propeller hub, wherein the propeller blades are rotatably connected to the propeller hub through a rotating shaft to fold the propeller blades toward an axis of rotation of the propeller hub, there is a preset angle between an axis of the rotating shaft and the axis of rotation, the preset angle is greater than 0°.

The embodiments of the present invention further provide a power assembly, including a motor and a propeller, wherein the motor is in connection with the propeller for power transmission; the propeller includes a propeller hub and at least two propeller blades arranged at equal intervals along a periphery of the propeller hub; and the propeller blades are rotatably connected to the propeller hub through a rotating shaft, to fold the propeller blade toward an axis of rotation of the propeller hub, there is a preset angle between an axis of the rotating shaft and the axis of rotation, and the preset angle is greater than 0°.

The embodiments of the present invention further provide an aerial vehicle, characterized by comprising a body and the power assembly mentioned above.

The present invention provides a propeller, a power assembly and an aerial vehicle. The propeller blades are rotatably connected to the propeller hub through a rotating shaft. In addition, there is a preset angle between an axis of the rotating shaft and the axis of rotation. After the aerial vehicle lands on the ground, the propeller blades rotates around the rotating shaft, so that the propeller blades fold toward the axis of rotation of the propeller hub, thereby preventing the propeller blade from hitting the ground or an object on the ground, and preventing the propeller blade from being damaged.

### BRIEF DESCRIPTION OF THE DRAWINGS

FIG. 1 is a first schematic structural diagram of a propeller blade of a propeller in a folded state according to some embodiments of the present invention.
FIG. 2 is a first schematic structural diagram of a propeller blade of a propeller in an unfolded state according to some embodiments of the present invention.
FIG. 3 is a schematic diagram of mounting of a ring shaped leaf spring and a propeller blade in a propeller according to some embodiments of the present invention.
FIG. 4 is a schematic diagram of mounting of a ring shaped leaf spring and a propeller hub in a propeller according to some embodiments of the present invention.
FIG. 5 is a partial enlarged view of A in FIG. 4.
FIG. 6 is a second schematic structural diagram of a propeller blade of a propeller in a folded state according to some embodiments of the present invention.
FIG. 7 is a second schematic structural diagram of a propeller blade of a propeller in an unfolded state according to some embodiments of the present invention.
FIG. 8 is a third schematic structural diagram of a propeller blade of a propeller in a folded state according to some embodiments of the present invention.
FIG. 9 is a third schematic structural diagram of a propeller blade of a propeller in an unfolded state according to some embodiments of the present invention.

Description of reference numerals:
10. propeller blade;
101. ring shaped groove;
102. mounting opening;
103. protruding portion;
104. rotating shaft;
20. propeller hub;
201. extension portion;
30. ring shaped leaf spring;
40. spring;
50. elastic piece;
501. mounting piece;
502. bending portion;
60. rotating member;
601. main shaft.

### DETAILED DESCRIPTION

To make the objects, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the scope of protection of the present invention. Without conflict, the following embodiments and features of the embodiments may be combined.

An aerial vehicle includes a body and a drive device and a propeller that are disposed on the body. The drive device may be a motor, an internal combustion engine, or the like. For example, when the aerial vehicle is a fixed-wing aerial vehicle, both the drive device and the propeller may be disposed at a front end of the body, or both are disposed at a rear end of the body. Propeller blades on the propeller are roughly on the same plane that is perpendicular to an axis of rotation of the propeller. The propeller is in connection with the drive device for power transmission. During operation, the drive device drives the propeller to rotate, thereby causing air to flow toward the rear of the body, so that the body obtains a forward thrust. Certainly, the aerial vehicle may alternatively be a rotary wing aerial vehicle.

### Embodiment 1

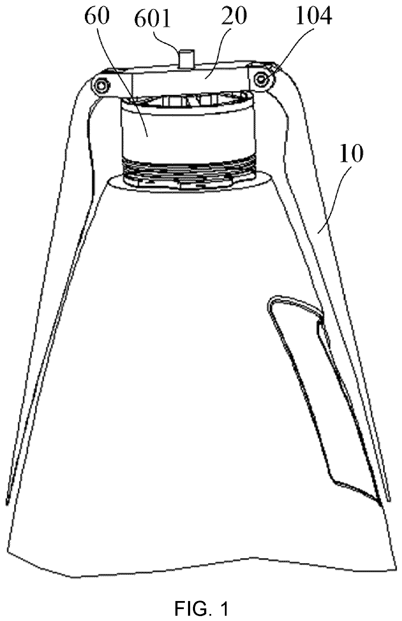

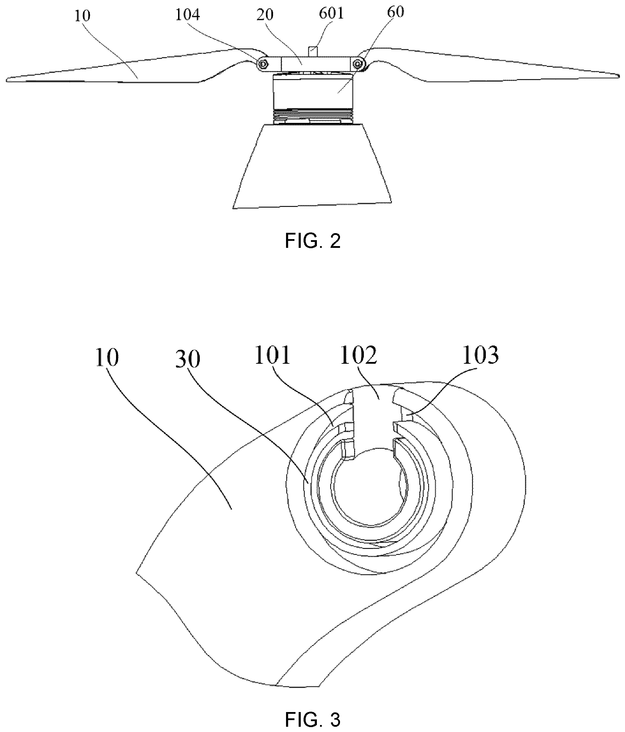

FIG. 1 is a first schematic structural diagram of a propeller blade of a propeller in a folded state according to some embodiments of the present invention. FIG. 2 is a first schematic structural diagram of a propeller blade of a propeller in an unfolded state according to some embodiments of the present invention.

Refer to FIG. 1 and FIG. 2. This embodiment provides a propeller that is applicable to an unmanned aerial vehicle, and includes: a propeller hub 20, capable of rotating around an axis of rotation; and at least two propeller blades 10, rotatably connected to the propeller hub 20, where a status of rotation of the propeller blade 10 relative to the propeller hub 20 includes an unfolded state and a folded state. In the unfolded state, a first angle is formed between a length direction of the propeller blade 10 and the axis of rotation. In the folded state, a second angle is formed between the length direction of the propeller blade 10 and the axis of rotation. The second angle is not equal to the first angle.

Specifically, the propeller hub 20 is configured to connect to a drive device of the unmanned aerial vehicle, to drive, through the drive device, the propeller hub 20 to rotate. The unfolded state is a state in which the propeller blade provides power for the unmanned aerial vehicle. The folded state is a state in which there is no need to provide power for the unmanned aerial vehicle when it lands on the ground.

Still referring to FIG. 2, in the unfolded state, the first angle is formed between the length direction of the propeller blade 10 and the axis of rotation. The first angle may be 90°. Certainly, the first angle may alternatively be 85°, or the like. In the folded state, the second angle is formed between the length direction of the propeller blade 10 and the axis of rotation. The second angle may be 0°, 5°, or the like. When the first angle is formed between the length direction of the propeller blade 10 and the axis of rotation, the propeller blade 10 is in the unfolded state, and in this case may drive the propeller blade 10 to rotate so as to provide power for the unmanned aerial vehicle provide. When the propeller blade 10 rotates relative to the propeller hub 20 to form the second angle between the length direction of the propeller blade 10 and the axis of rotation, the propeller blade 10 is in the folded state, thereby preventing the propeller blade 10 from hitting an external object, and preventing the propeller blade 10 from being damaged.

In the propeller of unmanned aerial vehicle provided in the this embodiment, the propeller blade 10 is rotatably connected to the propeller hub 20, and the state of the rotation of the propeller blade 10 relative to the propeller hub 20 includes the unfolded state and the folded state. When the unmanned aerial vehicle does not need to fly, the propeller blade 10 may be rotated relative to the propeller hub 20 to reach the folded state, thereby preventing the propeller blade 10 from hitting the ground or an object on the ground, and preventing the propeller blade 10 from being damaged.

### Embodiment 2

Referring to FIG. 1 and FIG. 2, this embodiment provides a propeller, including a propeller hub 20 and at least two propeller blades 10 arranged at equal intervals along a periphery of the propeller hub 20. The propeller blades 10 are rotatably connected to the propeller hub 20 through a rotating shaft 104, to fold the propeller blades 10 toward an axis of rotation of the propeller hub 20, or to unfold the propeller blades 10 away from the axis of rotation of the propeller hub 20. In addition, there is a preset angle between an axis of the rotating shaft 104 and the axis of rotation. The preset angle may be greater than 0°.

Specifically, the propeller hub 20 is configured to connect to a drive device and a propeller blades 10 of an aerial vehicle. The propeller hub 20 may be columnar or plate-shaped. The corresponding propeller hub 20 needs to have a structure symmetrical relative to a center of the axis of rotation, to avoid vibration of a body of the aerial vehicle under the action of a centrifugal force when the propeller hub 20 rotates. The drive device may be any device capable of driving the propeller hub 20 to rotate around the axis of rotation. For example, the drive device may be a motor or an internal combustion engine.

For example, the propeller hub 20 may be disk-shaped. Correspondingly, a center of the disk-shaped propeller hub 20 is located on the axis of rotation, and the axis of rotation is arranged perpendicular to the propeller hub 20. Certainly, the propeller hub 20 may alternatively be of a rectangular plate shape. Correspondingly, a diagonal intersection of the propeller hub 20 is located on the axis of rotation, and the axis of rotation is arranged perpendicular to the propeller hub 20.

In this embodiment, the propeller blades 10 may be in various quantities. For example, there may be two, three, or four propeller blades 10. It should be noted that, when the propeller hub 20 rotates to provide power for the body, the propeller blades 10 are in an unfolded state, that is, the propeller blades 10 are roughly located on the same plane that is perpendicular to the axis of rotation. In addition, the propeller blades 10 are symmetrical relative to the center of the axis of rotation, to avoid vibration of the body or flight instability caused by uneven distribution of the propeller blades 10 when the propeller hub 20 drives the propeller blades 10 to rotate.

In this embodiment, the propeller blades 10 are rotatably connected to the propeller hub 20 through the rotating shaft 104. There may be a plurality of types of preset angles between the axis of the rotating shaft 104 and the axis of rotation of the propeller hub 20, provided that the propeller blades 10 can be folded toward the axis of rotation of the propeller hub 20 when the aerial vehicle does not need to fly, so as to increase a distance between the propeller blades 10 and the ground, thereby preventing the propeller blades 10 from hitting the ground or an object on the ground. For example, the preset angle may be 45°, 60°, or the like. Certainly, the preset angle may alternatively be another angle.

Specifically, a status of rotation of the propeller blades 10 relative to the propeller hub 20 includes a folded state after folding toward the axis of rotation and an unfolded state prior to the folding. When in the unfolded state, the propeller blades 10 can provide the aerial vehicle with power perpendicular to a plane on which the propeller blades 10 is unfolded.

Still referring to FIG. 1, in this embodiment, preferably, the preset angle is 90°. It should be noted that, in this case, the axis of the rotating shaft 104 and the axis of rotation of the propeller hub 20 need to be arranged on different planes.

In this embodiment, one end of the propeller hub 20 is connected to the drive device located on the body. When the aerial vehicle does not need to fly, the propeller blades 10 may rotate toward the body or the propeller blades 10 may rotate in a direction away from the body, so that the propeller blades 10 can be folded, thereby preventing the propeller blades 10 from hitting an external object. A fixed-wing aerial vehicle is used as an example, when the propeller is mounted at the front end of the body of the aerial vehicle, and the planes where the unfolded propeller blades 10 are located are perpendicular to a horizontal plane, the propeller blades 10 may be folded toward the front end of the body, so that the propeller blades 10 extend toward the front end of the body, and a distance between the propeller blades10 and the ground is increased to prevent the propeller blades 10 from hitting an object on the ground. Certainly, the propeller blades 10 may alternatively be folded toward the rear end of the body, so that the propeller blades 10 extend toward the rear end of the body, which, compared with the case in which the propeller blades 10 extend toward the front end of the body, can prevent the propeller blades 10 from protruding outside the body while increasing a distance between the propeller blades 10 and the ground, thereby preventing the propeller blades 10 from being in contact with an object on the front side of the body, and reducing a space occupied by the aerial vehicle.

Certainly, the propeller may alternatively be mounted at the rear end of the body, and planes where the unfolded propeller blades 10 are located is perpendicular to a horizontal plane. In this case, the propeller blades 10 may alternatively be folded toward the rear end of the body, so that the propeller blades 10 extend toward the rear end of the body. Alternatively, the propeller blades 10 may be folded to the front end of the body, which, compared with the case in which the propeller blades 10 is folded toward the rear end of the body, can prevent the propeller blades 10 from protruding outside the body while increasing a distance between the propeller blades 10 and the ground, thereby preventing the propeller blades 10 from being in contact with an object on the rear side of the body.

When the aerial vehicle is a rotary wing aerial vehicle, and the rotary wing aerial vehicle does not need to fly, the propeller blades 10 may be folded toward a direction facing away from the ground. Certainly, the propeller blades 10 may alternatively be folded toward the ground, so that a space occupied by the aerial vehicle in a direction in which the propeller blades 10 is unfolded is reduced.

Referring to FIG. 1 and FIG. 2, a working process of the propeller provided in this embodiment is as follows: when the drive device disposed on the body of the aerial vehicle operates, the drive device drives the propeller hub 20 to rotate, which drives the propeller blades 10 to rotate around the axis of rotation of the propeller hub 20. In this process, the propeller blades 10 rotate in a direction away from the axis of rotation of the propeller hub 20 under the action of centrifugal force, so that each propeller blade 10 is roughly located on a plane perpendicular to the axis of rotation of the propeller hub 20, that is, each propeller blade 10 is in the unfolded state, thereby driving air to flow so as to provide power for the body. When the aerial vehicle does not need to fly, the propeller blades 10 may be enabled to rotate around the rotating shaft 104, so that the propeller blades 10 are folded toward the axis of rotation, making the propeller blades 10 in the folded state. It should be noted that, when the propeller blades 10 are in the folded state, there may be a particular angle between the propeller blades 10 and the axis of rotation. The angle may be 5°, 10°, or the like, to prevent the propeller blades 10 from hitting the body.

In the propeller provided in this embodiment, the propeller blades 10 are rotatably connected to the propeller hub 20 through the rotating shaft 104, and there is a preset angle between the axis of the rotating shaft 104 and the axis of rotation of the propeller hub 20. When the aerial vehicle does not need to fly, the propeller blades 10 may be enabled to rotate around the rotating shaft 104, so that the propeller blades 10 is folded toward the axis of rotation of the propeller hub, thereby preventing the propeller blades 10 from hitting the ground or an object on the ground, and preventing the propeller blades 10 from being damaged.

In this embodiment, the propeller may further include an elastic member. The elastic member is connected to the propeller hub 20 and the propeller blades 10, to drive the propeller blades 10 to fold toward an axis of the propeller hub 20. When the propeller stops rotating, the elastic member drives, under the action of an elastic force thereof, the propeller blades 10 to rotate around the rotating shaft 104 of the propeller blades 10 and the propeller hub 20, so that the propeller blades 10 fold toward the axis of rotation without any manual operation or with only a few manual operations.

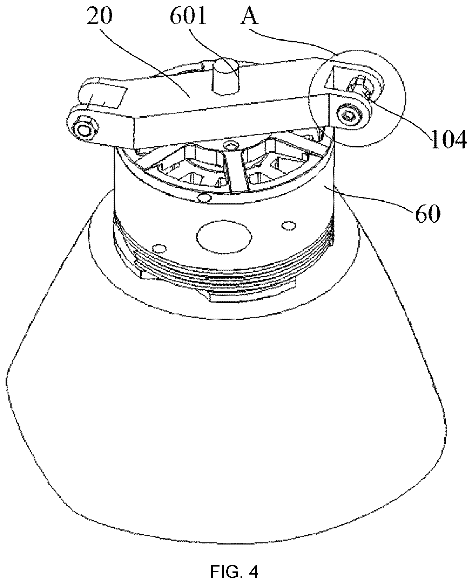

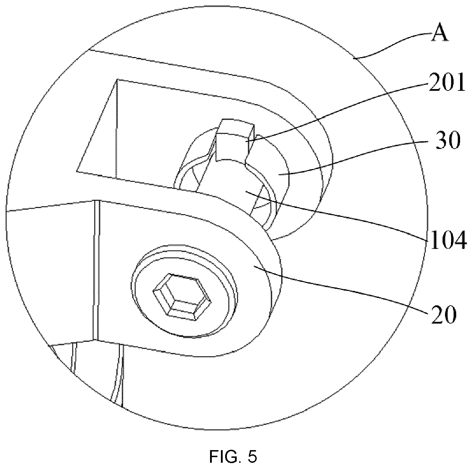

FIG. 3 is a schematic diagram of mounting of a ring shaped leaf spring in a propeller according to an embodiment of the present invention. FIG. 4 is a schematic diagram of mounting of a ring shaped leaf spring and a propeller hub in a propeller according to an embodiment of the present invention. FIG. 5 is a partial enlarged view of A in FIG. 4. Referring to FIG. 1 to FIG. 5, specifically, the elastic member may include a ring shaped leaf spring 30. A side wall of the ring shaped leaf spring 30 is provided with a slot opening. The ring shaped leaf spring 30 is sleeved over an outer side of the rotating shaft 104 of the propeller blades 10 and the propeller hub 20. In addition, when the ring shaped leaf spring 30 drives the propeller blades 10 to unfold, one end of the slot opening is connected to the propeller hub 20, and another end of the slot opening is connected to the propeller blades 10.

For example, when the drive device drives the propeller hub 20 and the propeller blades 10 to rotate, the propeller blades 10 rotate toward a direction away from the axis of rotation under the action of a centrifugal force, so that the ring shaped leaf spring 30 is elastically deformed, and a width of the slot opening increases, until each propeller blade 10 is in the unfolded state. When the drive device stops operating, under the action of elasticity of the ring shaped leaf spring 30, the ring shaped leaf spring 30 recovers from the deformation, and the width of the slot opening decreases, thereby driving the propeller blades 10 to fold toward the axis of rotation of the propeller hub 20.

Still referring to FIG. 3 to FIG. 5, specifically, a mounting end of the propeller blade 10 facing the propeller hub 20 is provided with a ring shaped groove 101 with a center line collinear with an axis of the rotating shaft 104. The ring shaped groove 101 is provided with a protruding portion 103 engaged with the slot opening. The ring shaped leaf spring 30 is accommodated in the ring shaped groove 101. The propeller hub 20 has an extension portion 201 extending into the slot opening. When the ring shaped leaf spring 30 drives the propeller blade(s) 10 to fold, the extension portion 201 abuts against one end of the slot opening of the ring shaped leaf spring 30, the protruding portion 103 abuts against the other end of the slot opening, thus the width of the slot opening decreases.

In an implementable manner, when the propeller blades 10 are in the folded state, the protruding portion 103 and the extension portion 201 may be sequentially arranged in the slot opening along a direction parallel to the center line of the ring shaped leaf spring 30, that is, the protruding portion 103 and the extension portion 201 are arranged opposite to each other. Optionally, a width of the extension portion 201 is equal to a width of the protruding portion 103. In this case, two ends of the slot opening are respectively in contact with two ends of the protruding portion 103 or the extension portion 201 along the width. In another embodiment, the width of the extension portion 201 may be slightly less than or slightly greater than the width of the protruding portion 103. When the propeller hub 20 rotates, the propeller blades 10 rotate around the rotating shaft 104 under the action of a centrifugal force. In this case, the protruding portion 103 and the extension portion 201 are staggered from each other, the extension portion 201 gradually slides into the ring shaped groove 101, one end of the slot opening is in contact with the protruding portion 103, the other end of the slot opening is in contact with the extension portion 201, the width of the slot opening increases, and the ring shaped leaf spring 30 is elastically deformed. When a rotational speed of the propeller hub 20 decreases or the propeller hub 20 stops rotating, the ring shaped leaf spring 30 drives, under the action of elasticity thereof, the extension portion 201 and the protruding portion 103 to move close to each other, and the width of the slot opening decreases, so that the propeller blades10 fold toward the axis of rotation.

In another implementation, when the propeller blades 10 is in the folded state, the protruding portion 103 and the extension portion 201 may alternatively be arranged side by side. In addition, one end of the slot opening is in contact with the extension portion 201 alone, and the other end of the slot opening is in contact with the protruding portion 103 alone. When the propeller hub 20 rotates, the propeller blades 10 rotate around the rotating shaft 104 under the action of a centrifugal force. In this case, the protruding portion 103 and the extension portion 201 are far away from each other, the width of the slot opening increases, and the ring shaped leaf spring 30 is elastically deformed. When a rotational speed of the propeller hub 20 decreases or the propeller hub 20 stops rotating, the ring shaped leaf spring 30 drives, under the action of elasticity thereof, the extension portion 201 and the protruding portion 103 to move close to each other, and the width of the slot opening decreases, so that the propeller blades 10 folds toward the axis of rotation.

The ring shaped leaf spring 30 is accommodated in the ring shaped groove 101, which prevents an external object from being in contact with the ring shaped leaf spring 30. In addition, the ring shaped groove 101 may also be used for limiting the ring shaped leaf spring 30, thereby preventing the ring shaped leaf spring 30 from moving.

In this embodiment, the propeller hub 20 includes a body and a first connecting plate and a second connecting plate that are arranged on an end(s) of the body, and the first connecting plate and the second connecting plate are arranged in parallel and spaced apart. The mounting end is arranged between the first connecting plate and the second connecting plate, and the mounting end is hingedly connected to the first connecting plate and the second connecting plate through the rotating shaft 104. The first connecting plate is configured to close the ring shaped groove 101, and the extension portion 201 is disposed on one side of the first connecting plate facing the ring shaped groove 101. The mounting end is hingedly connected to both the first connecting plate and the second connecting plate to improve the connection strength between the propeller blades 10 and the propeller hub 20.

Specifically, the first connecting plate may be provided with a first hinge hole, the second connecting plate may be provided with a second hinge hole, and a center line of the first hinge hole, a center line of the second hinge hole and the axis of the rotating shaft 104 are arranged collinearly. A mounting end of the propeller blade 10 facing the propeller hub 20 is provided with a third hinge hole. The rotating shaft 104 is inserted in the first hinge hole, the second hinge hole, and the third hinge hole, so that the propeller blade(s) 10 is hingedly connected to the propeller hub 20. The ring shaped groove 101 is provided on a side surface of the mounting end facing the first connecting plate. Correspondingly, the extension portion 201 is disposed on a side surface of the first connecting plate facing the mounting end. When the mounting end is arranged between the first connecting plate and the second connecting plate, the extension portion 201 protrudes into the ring shaped groove 101 and is located in the slot opening of the ring shaped leaf spring 30. The protruding portion 103 and the extension portion 201 are spaced apart along a direction parallel to the center line of the ring shaped groove 101, that is, the protruding portion 103 and the extension portion 201 are arranged opposite to each other.

Still referring to FIG. 3 and FIG. 5, further, an outer surface of the mounting end is provided with a mounting opening 102 running therethrough to reach the ring shaped groove 101, the mounting opening 102 directly faces the protruding portion 103, and a width of the mounting opening 102 is equal to or slightly greater than a width of the extension portion 102. During mounting, the extension portion 201 may be first aligned with the mounting opening 102, and then the mounting end is pushed to make the extension portion 201 enter the ring shaped groove 101 through the mounting opening 102. At the same time, the extension portion 201 enters the slot opening of the ring shaped leaf spring 30, to prevent the extension portion 201 from being in contact with an outer surface of the mounting end during mounting, thereby facilitating mounting the propeller blade(s) 10 to the propeller hub 20.

It should be noted that, the shape of the extension portion 201 should be properly set, so that a width of the extension portion 201 along a radial direction of the ring shaped groove 101 is less than or equal to a width of the ring shaped groove 101 along the radial direction, and the extension portion 201 can smoothly slide into the ring shaped groove 101, enabling the propeller blade(s) 10 to rotate around the rotating shaft 104.

In this embodiment, when the propeller blade(s) 10 folds toward the axis of rotation to the folded state, two ends of the slot opening is in contact with the protruding portion 103 or the extension portion 201. In this way, the propeller blade(s) 10 is prevented from moving due to shaking of the ring shaped leaf spring 30 in the ring shaped groove 101. Specifically, a width of the protruding portion 103 or the extension portion 201 may be equal to the width of the slot opening, that is, two ends of the slot opening are exactly engaged with the protruding portion 103 or the extension portion 201. Alternatively, a width of the protruding portion 103 or the extension portion 201 may be slightly greater than the width of the slot opening, so that two ends of the slot opening are in interference fit with the protruding portion 103 or the extension portion 201.

Optionally, the width of the extension portion 201 is equal to the width of the protruding portion 103, so that when the propeller blade(s) 10 is in the folded state, two ends of the slot opening are in contact with the extension portion 201 and the protruding portion 103. The protruding portion 103 and the extension portion 201 are spaced apart along a direction parallel to the rotating shaft 104, that is, the protruding portion 103 and the extension portion 201 overlap. When the propeller hub 20 rotates, the propeller blade(s) 10 rotates under the action of a centrifugal force, so that the protruding portion 103 and the extension portion 201 are staggered with each other. In a process in which the extension portion 201 may gradually slide into the ring shaped groove 101, the extension portion 201 abuts against one end of the slot opening, the protruding portion 103 abuts the other end of the slot opening, and the ring shaped leaf spring 30 is elastically deformed.

In this embodiment, when the propeller hub 20 rotates, the propeller blade(s) 10 rotates toward a direction away from the axis of rotation under the action of a centrifugal force. The propeller blade(s) 10 may automatically unfold under the action of the centrifugal force.

It should be noted that, as a rotational speed of the propeller hub 20 gradually increases, the centrifugal force received by the propeller blade(s) 10 gradually increases. When the rotational speed of the propeller hub 20 reaches a preset rotational speed, each propeller blade 10 rotates toward the direction away from the axis of rotation to reach the unfolded state. The preset rotational speed should not be greater than a rotational speed required by the aerial vehicle to take off, so that each propeller blade 10 can completely unfold before the aerial vehicle takes off.

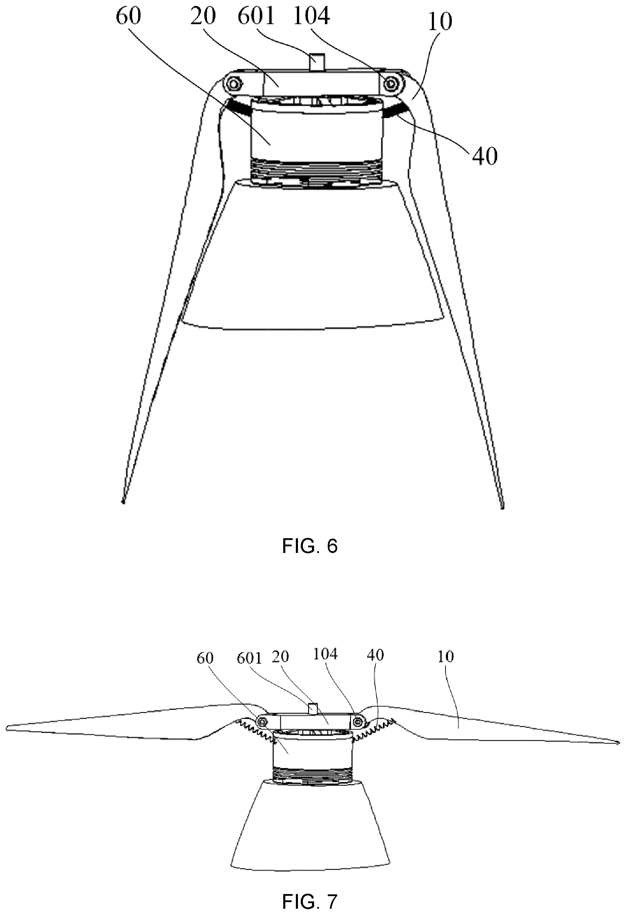

FIG. 6 is a second schematic structural diagram of a propeller blade of a propeller in a folded state according to some embodiments of the present invention. FIG. 7 is a second schematic structural diagram of a propeller blade of a propeller in an unfolded state according to some embodiments of the present invention. Referring to FIG. 6 and FIG. 7, in this embodiment, the elastic member may further include a spring 40. The body has a rotating member 60 in connection with the propeller hub 20 to transmit power. One end of the spring 40 is connected to the rotating member 60, and the other end of the spring 40 is connected to the propeller blade(s) 10. The spring 40 drives the propeller blade 10(s) to rotate around the rotating shaft 104 of the propeller blade(s) 10 and the propeller hub 20, so that the structure is simple. In addition, the rotating member 60 rotates synchronously with the propeller hub 20, thus the spring 40 connected to the rotating member 60 and the propeller blade 10 does not prevent the propeller blade(s) 10 from rotating with the propeller hub 20.

The rotating member 60 is not limited in this embodiment, provided that the rotating member 60 is ensured to rotate synchronously with the propeller hub 20. For example, the rotating member 60 may be a drive device. Still referring to FIG. 1 to FIG. 7, the rotating member 60 may be provided with a main shaft 601. Correspondingly, the propeller hub 20 is provided with a shaft hole. The main shaft 601 is inserted in the shaft hole to implement connection between the main shaft 601 and the propeller hub 20. Further, the main shaft 601 may be connected to the propeller hub 20 through a key connection, so as to drive the propeller hub 20 to rotate when the main shaft 601 rotates.

Still refer to FIG. 6 and FIG. 7. A working process of the propeller provided in this embodiment is as follows: when the drive device disposed on the body of the aerial vehicle operates, the drive device drives, through the rotating member 60, the propeller hub 20 to rotate, so as to drive the propeller blade 10(s) to rotate around the axis of the propeller hub 20. In this process, the propeller blade(s) 10 rotates toward a direction away from the axis of rotation of the propeller hub 20 under the action of a centrifugal force to pull the spring 40, so that the spring 40 is elastically deformed. When each propeller blade 10 rotates to reach the unfolded state, the propeller blade(s) 10 is roughly located on a plane perpendicular to the axis of rotation of the propeller hub 20, thereby driving air to flow in a direction perpendicular to the propeller blade(s) 10, to provide power for the aerial vehicle. When the aerial vehicle lands, under the action of elasticity of the spring 40, the spring 40 contracts, causing the propeller blade(s) 10 to rotate around the rotating shaft 104, and causing the propeller blade(s) 10 to fold toward the axis of rotation of the propeller hub 20, to reduce a space occupied by the propeller blade 10 along a direction in which the propeller blade 10 is unfolded. For a fixed-wing aerial vehicle, the propeller may be disposed at a head portion or a tail portion of the body, and the axis of rotation of the propeller blade(s) 10 is parallel to the ground. When the propeller blade(s) 10 is folded, a distance between the propeller blade(s) 10 and the ground is reduced, so as to prevent the propeller blade(s) 10 from hitting the ground, thereby preventing the propeller blade 10 from being damaged.

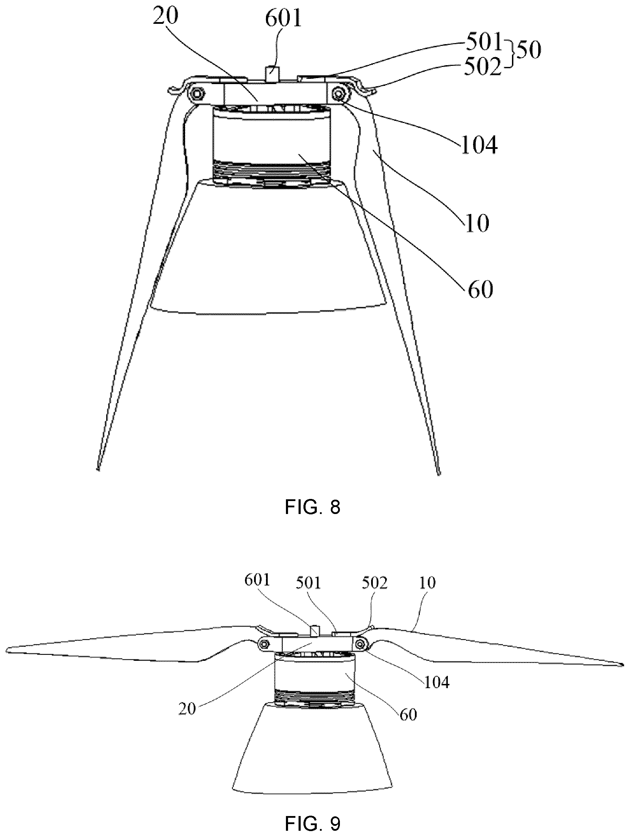

FIG. 8 is a third schematic structural diagram of a propeller blade of a propeller in a folded state according to some embodiments of the present invention. FIG. 9 is a third schematic structural diagram of a propeller blade of a propeller in an unfolded state according to some embodiments of the present invention. Referring to FIG. 8 and FIG. 9, in this implementation, the elastic member includes an elastic piece 50, the elastic piece 50 is disposed between the propeller hub 20 and the propeller blade(s) 10; the elastic piece 50 has a bending portion 502, and the bending portion 502 abuts against the propeller blade(s) 10.

Specifically, the elastic piece 50 may include a mounting piece 501 connected to the propeller hub 20 and a bending portion 502 disposed at an end of the mounting piece 501. The bending portion 502 may be arc-shaped or there may be a particular angle between the bending portion 502 and the mounting piece 501. When the propeller blade(s) 10 is in an initial folded state, the bending portion 502 is bent toward the propeller blade(s). Further, the bending portion 502 is in contact with or attached to the propeller blade 10. The mounting piece 501 may be connected to the propeller hub 20 by bonding, welding, or bolting. The bending portion 502 and the mounting piece 501 may be integrally formed.

Still referring to FIG. 8 and FIG. 9, a working process of the propeller provided in this embodiment may be as follows: when the drive device disposed on the body of the aerial vehicle operates, the drive device drives the propeller hub 20 to rotate, so as to drive the propeller blade(s) 10 to rotate around the axis of rotation of the propeller hub 20. In this process, the propeller blade(s) 10 rotates in a direction away from the axis of rotation of the propeller hub 20 under the action of a centrifugal force, and the propeller blade(s) 10 abuts against the bending portion 502 so that the bending portion 502 is elastically deformed. When each propeller blade 10 rotates to reach the unfolded state, each propeller hub 20 is roughly located on a plane perpendicular to the axis of the propeller hub 20, thereby driving air to flow in a direction perpendicular to the propeller blade(s) 10, to provide power for the body. After the aerial vehicle lands, under elasticity of the bending portion 502, the propeller blade(s) 10 rotates around the rotating shaft 104 between the propeller blade(s) 10 and the propeller hub 20, to make the propeller blade(s) 10 fold toward the axis of rotation of the propeller hub 20, thereby reducing a space occupied by the propeller blade 10 along a direction in which the propeller blade(s) 10 is unfolded. For a fixed-wing aerial vehicle, the propeller may be disposed at a head portion or a tail portion of the body, and the axis of rotation of the propeller blade 10 is parallel to the ground. When the propeller blade 10 is folded, a distance between the propeller blade 10 and the ground can be reduced, so as to prevent the propeller blade 10 from hitting the ground, thereby preventing the propeller blade 10 from being damaged.

Further, the elastic piece 50 may be disposed on one side of the propeller hub 20 facing away from the body. In this way, when the aerial vehicle lands, the elastic piece 50 drives the propeller blade(s) 10 to fold toward the body, thereby preventing the propeller blade 10 from protruding in a direction away from the body and thus occupying a larger space.

Further, when the propeller as described in Embodiment 1 and Embodiment 2 is unfolded, the propeller blade(s) 10 is roughly located on the same plane perpendicular to the axis of rotation of the propeller hub 20. Therefore, the propeller may further include a limiting structure (not shown). The limiting structure may be disposed on the propeller hub 20 or the propeller blade(s) 10, to prevent the propeller blade(s) from being unfolded to so extremely large size and that the propeller blades may be located on different planes.

### Embodiment 3

Referring to FIG. 1 to FIG. 9, this embodiment provides a power assembly, including a motor and a propeller. The motor is in connection with the propeller to transmit power, to drive the propeller to rotate.

The structure of the propeller is roughly the same as that of the propeller in Embodiment 2. Details will not be described herein again. In the power assembly provided in this embodiment, a propeller blade(s) 10 is rotatably connected to a propeller hub 20 through a rotating shaft 104. In addition, there is a preset angle between an axis of the rotating shaft 104 and an axis of rotation of the propeller hub 20. After an aerial vehicle lands on the ground, the propeller blade(s) 10 can rotate around the rotating shaft 104, so that the propeller blade(s) 10 is folded toward the axis of rotation of the propeller hub 20, to prevent the propeller blade(s) 10 from extending in an unfolding direction thereof, thereby preventing the propeller blade(s) 10 from hitting the ground or an object on the ground, and preventing the propeller blade 10 from being damaged.

### Embodiment 4

Still referring to FIG. 1 to FIG. 9, this embodiment provides an aerial vehicle, including the power assembly as described above.

In the aerial vehicle provided in this embodiment, a propeller blade(s) 10 is rotatably connected to a propeller hub 20 through a rotating shaft 104. In addition, there is a preset angle between an axis of the rotating shaft 104 and an axis of rotation of the propeller hub 20. After the aerial vehicle lands on the ground, the propeller blade(s) 10 can rotate around the rotating shaft 104, so that the propeller blade(s) 10 is folded toward the axis of rotation of the propeller hub 20, thereby preventing the propeller blade 10 from hitting the ground or an object on the ground, and preventing the propeller blade 10 from being damaged.

Finally, it should be noted that the foregoing embodiments are merely intended to describe but not limit the technical solutions of the present invention. Although the present invention has been described in detail with reference to the foregoing embodiments, a person of ordinary skill in the art should understand that they can still make modifications to the technical solutions described in the foregoing embodiments or make equivalent replacements to some or all of the technical features thereof. These modifications or replacements do not make the essence of the corresponding technical solutions deviate from the scope of the technical solutions of the embodiments of the present invention.

## Claims

1. A propeller, **characterized in that**, comprising:
a propeller hub, capable of rotating around an axis of rotation;
at least two propeller blades rotatably connected to the propeller hub, and a status of rotation of the propeller blades relative to the propeller hub including an unfolded state and a folded state, wherein
in the unfolded state, a first angle is formed between a length direction of each propeller blade and the axis of rotation, in the folded state, a second angle is formed between the length direction of each propeller blade and the axis of rotation, and the second angle is unequal to the first angle.

2. The propeller according to claim 1, **characterized in that** when the propeller blades are in the unfolded state, a plane on which each propeller blade is located is perpendicular to a horizontal plane.

3. The propeller according to claim 1, **characterized in that** the propeller further includes an elastic member, and the elastic member is connected to the propeller hub and the propeller blades, and is configured to drive the propeller blades to fold toward the axis of rotation.

4. The propeller according to claim 3, **characterized in that** the elastic member includes a ring shaped leaf spring, a side wall of the ring shaped leaf spring includes a slot opening, the ring shaped leaf spring is sleeved over an outer side of a rotating shaft between the propeller blades and the propeller hub, one end of the slot opening is connected to the propeller hub, and another end of the slot opening is connected to the propeller blades.

5. The propeller according to claim 4, **characterized in that** a mounting end of each propeller blade facing the propeller hub includes a ring shaped groove with a center line collinear with an axis of the rotating shaft, the ring shaped groove includes a protruding portion engaged with the slot opening, the ring shaped leaf spring is accommodated in the ring shaped groove; the propeller hub has an extension portion extending into the slot opening, the extension portion abuts against one end of the slot opening, and the protruding portion abuts against another end of the slot opening, to drive the propeller blades to fold toward the axis of rotation.

6. The propeller according to claim 5, **characterized in that** when the propeller blades fold toward the axis of rotation to reach the folded state, two ends of the slot opening are in contact with the protruding portion.

7. The propeller according to claim 5, **characterized in that** when the propeller hub rotates, the propeller blades rotate in a direction away from the axis of rotation under an action of a centrifugal force.

8. The propeller according to claim 5, **characterized in that** the propeller hub includes a body, and a first connecting plate and a second connecting plate that are arranged on an end of the body, the first connecting plate and the second connecting plate are arranged in parallel and spaced apart; the mounting end is disposed between the first connecting plate and the second connecting plate, the mounting end is hingedly connected to the first connecting plate and the second connecting plate through the rotating shaft; the first connecting plate is used for closing the ring shaped groove, and the extension portion is disposed on one side of the first connecting plate facing the ring shaped groove.

9. The propeller according to claim 8, **characterized in that** an outer surface of the mounting end includes a mounting opening running through to reach the ring shaped groove, and the mounting opening directly faces the protruding portion.

10. The propeller according to claim 3, **characterized in that** the elastic member includes a spring; a body of an aerial vehicle has a rotating member connecting with the propeller hub to transmit power, one end of the spring is connected to the rotating member, and another end of the spring is connected to the propeller blades.

11. The propeller according to claim 3, **characterized in that** the elastic member includes an elastic piece, the elastic piece is disposed on the propeller hub, the elastic piece includes a bending portion, and the bending portion abuts against the propeller blades.

12. The propeller according to claim 11, **characterized in that** the elastic piece is disposed on one side of the propeller hub facing away from a body.

13. A propeller, **characterized in that** comprising a propeller hub, and at least two propeller blades arranged at equal intervals along a periphery of the propeller hub, wherein
the propeller blades are rotatably connected to the propeller hub through a rotating shaft to fold the propeller blades toward an axis of rotation of the propeller hub, there is a preset angle between an axis of the rotating shaft and the axis of rotation, the preset angle is greater than 0°.

14. The propeller according to claim 13, **characterized in that** a status of rotation of the propeller blades relative to the propeller hub includes a folded state after folding toward the axis of rotation and an unfolded state prior to the folding; when the propeller blade is in the unfolded state, a plane on which each propeller blade is located is perpendicular to a horizontal plane.

15. The propeller according to claim 13, **characterized in that** the preset angle is 90°.

16. The propeller according to claim 13, **characterized in that** the propeller further includes an elastic member, the elastic member is connected to the propeller hub and the propeller blades, and is configured to drive the propeller blade to fold toward the axis of rotation.

17. The propeller according to claim 16, **characterized in that** the elastic member includes a ring shaped leaf spring, a side wall of the ring shaped leaf spring includes a slot opening, the ring shaped leaf spring is sleeved over an outer side of the rotating shaft, one end of the slot opening is connected to the propeller hub, and another end of the slot opening is connected to the propeller blade.

18. The propeller according to claim 17, **characterized in that** a mounting end of each propeller blade facing the propeller hub includes a ring shaped groove with a center line collinear with an axis of the rotating shaft, the ring shaped groove includes a protruding portion engaged with the slot opening, the ring shaped leaf spring is accommodated in the ring shaped groove; the propeller hub has an extension portion extending into the slot opening, the extension portion abuts against one end of the slot opening, and the protruding portion abuts against another end of the slot opening, to drive the propeller blades to fold toward the axis of rotation.

19. The propeller according to claim 18, **characterized in that** when the propeller blades fold toward the axis of rotation to reach the folded state, two ends of the slot opening are in contact with the protruding portion.

20. The propeller according to claim 18, **characterized in that** when the propeller hub rotates, the propeller blades rotate in a direction away from the axis of rotation under an action of a centrifugal force.

21. The propeller according to claim 18, **characterized in that** the propeller hub includes a body, and a first connecting plate and a second connecting plate that are arranged on an end of the body, the first connecting plate and the second connecting plate are arranged in parallel and spaced apart; the mounting end is disposed between the first connecting plate and the second connecting plate, the mounting end is hingedly connected to the first connecting plate and the second connecting plate through the rotating shaft; the first connecting plate is used for closing the ring shaped groove, and the extension portion is disposed on one side of the first connecting plate facing the ring shaped groove.

22. The propeller according to claim 21, **characterized in that** an outer surface of the mounting end includes a mounting opening running through to reach the ring shaped groove, and the mounting opening directly faces the protruding portion.

23. The propeller according to claim 16, **characterized in that** the elastic member includes a spring; a body of an aerial vehicle has a rotating member connecting with the propeller hub to transmit power, one end of the spring is connected to the rotating member, and another end of the spring is connected to the propeller blades.

24. The propeller according to claim 16, **characterized in that** the elastic member includes an elastic piece, the elastic piece is disposed on the propeller hub, the elastic piece includes a bending portion, and the bending portion abuts against the propeller blades.

25. The propeller according to claim 24, **characterized in that** the elastic piece is disposed on one side of the propeller hub facing away from a body.

26. A power assembly, **characterized by** comprising a motor and a propeller, wherein
the motor is in connection with the propeller to transmit power;
the propeller includes a propeller hub and at least two propeller blades arranged at equal intervals along a periphery of the propeller hub; and
the propeller blades are rotatably connected to the propeller hub through a rotating shaft, to fold the propeller blade toward an axis of rotation of the propeller hub, there is a preset angle between an axis of the rotating shaft and the axis of rotation, and the preset angle is greater than 0°.

27. The power assembly according to claim 26, **characterized in that** a status of rotation of the propeller blade relative to the propeller hub includes a folded state after folding toward the axis of rotation and an unfolded state prior to the folding; when the propeller blade is in the unfolded state, a plane on which each propeller blade is located is perpendicular to a horizontal plane.

28. The power assembly according to claim 26, **characterized in that** the preset angle is 90°.

29. The power assembly according to claim 26, **characterized in that** the propeller further includes an elastic member, and the elastic member is connected to the propeller hub and the propeller blade, and is configured to drive the propeller blade to fold toward the axis of rotation.

30. The power assembly according to claim 29, **characterized in that** the elastic member includes a ring shaped leaf spring, a side wall of the ring shaped leaf spring includes a slot opening, the ring shaped leaf spring is sleeved over an outer side of the rotating shaft, one end of the slot opening is connected to the propeller hub, and another end of the slot opening is connected to the propeller blade.

31. The power assembly according to claim 30, **characterized in that** a mounting end of each propeller blade facing the propeller hub includes a ring shaped groove with a center line collinear with an axis of the rotating shaft, the ring shaped groove includes a protruding portion engaged with the slot opening, and the ring shaped leaf spring is accommodated in the ring shaped groove; the propeller hub has an extension portion extending into the slot opening, the extension portion abuts against one end of the slot opening, and the protruding portion abuts against another end of the slot opening, to drive the propeller blades to fold toward the axis of rotation.

32. The power assembly according to claim 31, **characterized in that** when the propeller blades fold toward the axis of rotation to reach the folded state, two ends of the slot opening are in contact with the protruding portion.

33. The power assembly according to claim 31, **characterized in that** when the propeller hub rotates, the propeller blade rotates in a direction away from the axis of rotation under an action of a centrifugal force.

34. The power assembly according to claim 31, **characterized in that** the propeller hub includes a body, and a first connecting plate and a second connecting plate that are arranged on an end of the body, the first connecting plate and the second connecting plate are arranged in parallel and spaced apart; the mounting end is disposed between the first connecting plate and the second connecting plate, the mounting end is hingedly connected to the first connecting plate and the second connecting plate through the rotating shaft; and the first connecting plate is used for closing the ring shaped groove, the extension portion is disposed on one side of the first connecting plate facing the ring shaped groove.

35. The power assembly according to claim 34, **characterized in that** an outer surface of the mounting end includes a mounting opening running through to reach the ring shaped groove, and the mounting opening directly faces the protruding portion.

36. The power assembly according to claim 29, **characterized in that** the elastic member includes a spring; a body of an aerial vehicle has a rotating member connecting with the propeller hub to transmit power, one end of the spring is connected to the rotating member, and another end of the spring is connected to the propeller blade.

37. The power assembly according to claim 29, **characterized in that** the elastic member includes an elastic piece, the elastic piece is disposed on the propeller hub, the elastic piece includes a bending portion, and the bending portion abuts against the propeller blades.

38. The power assembly according to claim 37, **characterized in that** the elastic piece is disposed on one side of the propeller hub facing away from a body.

39. An aerial vehicle, **characterized by** comprising a body and the power assembly according to any one of claims 26 to 38.
